**Europäisches Patentamt**

**European Patent Office**

**Office européen des brevets**

(19)

(11) Publication number : **0 249 575 B1**

# EUROPEAN PATENT SPECIFICATION

(12)

(45) Date of publication of patent specification :
23.11.94 Bulletin 94/47

(51) Int. Cl.⁵ : **H04M 3/50**

(21) Application number : **87810237.5**

(22) Date of filing : **15.04.87**

(54) Computerized communications system.

(30) Priority : **16.04.86 US 852878**

(43) Date of publication of application :
**16.12.87 Bulletin 87/51**

(45) Publication of the grant of the patent :
**23.11.94 Bulletin 94/47**

(84) Designated Contracting States :
**DE FR GB IT NL**

(56) References cited :
**EP-A- 0 032 410**
**WO-A-85/05000**
**GB-A- 1 551 791**
**US-A- 4 150 255**
**COMPUTER DESIGN, vol. 24, no. 8, July 1985,**
**pages 19-22, Littleton,Massachusetts, US; K.**
**MARRIN: "Market for speech ICs crumbles;**
**software speechmay fill the void"**

(56) References cited :
**ICC '79 CONFERENCE RECORD, BOSTON, US,**
**10th-14th June 1979, vol. 1/4, pages 3.3.1-**
**3.3.7,IEEE, New York, US; R.G. CORNELL et**
**al.: "A centralized approach tonew network**
**services"**

(73) Proprietor : **Call It Co**
**One Corporate East**
**1910 East Kimberly Road**
**Davenport Iowa 52807 (US)**

(72) Inventor : **Crane, Michael B.**
**2819 Greenway Drive**
**Bettendorf Iowa 52722 (US)**
Inventor : **Sullivan, Neil W.**
**4221 Amesbury Drive**
**Bettendorf Iowa 52722 (US)**

(74) Representative : **Hranitzky, Wilhelm Max et al**
**NOVAPAT- CABINET CHEREAU**
**9, rue du Valais**
**CH-1202 Genève (CH)**

## Description

The present invention relates to a computerized communications system for collecting input information from audio responses of a person in a telephonic dialogue between the person and said system, comprising :
means for connecting the person to said computerized communications system;
means for storing predetermined audio information; computer means for providing a ("predetermined" possibly into a sub-claim, as inconsistent with claim 5) sequence of audio signals responsive to said predetermined audio information;
audio means for outputting selected audio message signals to the person responsive to said audio signals and for collecting said input information.

The present invention relates generally to an apparatus and method for collecting information from a person connected by telephone to the apparatus. More particularly, the invention relates to a computerized system for collecting input information from a person connected by telephone to the computerized system by carrying out a conversational dialogue with the person.

Previous systems for collecting information from a person connected by telephone to the system have been relatively unsophisticated in the manner of soliciting and collecting input information. The systems are generally inefficient in collecting the information and can even result in collecting useless and misleading information. Furthermore, in previous systems the dialogue between the person and the system has been quite stilted and unnatural due to a rigid script presented to the caller and also due to the inability to respond to circumstances which lie outside or deviate from the rigid script. In general such systems do not provide the person many options or degrees of freedom during the process of collecting information from the person. For example, the caller might commit errors in aswering questions, have questions of particular interest or wish to provide information which cannot be accommodated by the computerized system.

GB-A-1 551 791 describes a computerized telephone communication system which receives telephone calls from users who input audio information to the system in response to a fixed sequence of questions asked by the computer.

EP-A-0 032 410 describes a computerized telephone system by which a user can input a set of lottery numbers over the 'phone to a remote computer, together with his personal data, by following a sequence of instructions issued by the computer.

## Brief Summary of the Invention

One of the primary objects of the invention is to provide an improved computerized communications system and method of operation thereof for collecting input information in a telephonic dialogue with a person connected to the system.

A more particular object of the invention is to provide a novel computerized communications system enabling a person connected to the system various selectable methods of providing input information to the system.

Another object of the invention is to provide an improved computerized communications system capable of verifying selected information to a party connected thereto by telephone and also capable of analyzing erroneous inputs or the lack of an input and responding appropriately to the person.

An additional object of the invention is to provide a novel computerized communications system for collecting a variety of input information from a person connected to the system with the ability to associate and correlate the input information.

It is another object of the invention to provide an improved computerized communications system which has the ability to simultaneously collect input information from a plurality of different persons in a plurality of separate dialogues with the persons, selecting for use at least one of a plurality of respective associated sets of audio message signals.

A further object of the invention is to provide a novel apparatus for programming a computerized system to automatically collect information from a person connected to the system by telephone.

It is an additional object of the invention to provide an improved computerized communications system for collecting information from a person connected to the system and who can selectively verify, change and add input information.

According to the present invention, these objects are achieved by a computerized communication system as described hereinabove, which is, characterized in that said audio means comprises a telephone signal processing apparatus including a telephone interface means, an audio message signal emitting means for emitting audio message signals to the person including selectable options for inputting input information, and input information processing means for recognizing the option for inputting said input information selected by said person, said input information processing means comprising a sound detector and a tone decoder.

In accordance with the invention an apparatus and method is provided for collecting input information in a telephonic dialogue between a person and a connected computerized system. This system calls upon predetermined audio information, including computer software programs and prerecorded audio script, to carry out the telephonic dialogue. The computerized system enables the collection of the input information, while allowing the person connected to the system various selectable optional ways of providing the input information to the system, such as by the person speaking directly to an operator, inputting input information to a storage means or by the person inputting data and encoded tones using a touch tone keypad on a telephone. The system efficiently collects a variety of information, such as marketing, sales and shipping information, which can all be associated and correlated among each type of information, as well as with the identity of the person providing the input information. Detailed statistical information is derivable from this body of input information. This input information is collected while still maintaining a smooth conversational flow to the telephonic dialogue by using carefully interspersed periods of collecting the input information and deactivating collection of the input information after detecting preselected periods of silence, wherein the sound level is below a predetermined sound threshold. The detected period of silence is typically followed by additional questions or comments output from the computerized system responsive to the silence or to receiving a specific response having significance to the computerized system. The computerized system further is able to selectively verify input information by asking the person to verify, correct or add to the input information. The accuracy and efficiency of the computerized system is enhanced by analyzing and counting errors in input information, by a process of comparing with a set of predetermined caller errors counts. The computerized system then is able to respond appropriately to the number and assigned weight of various types of errors. Appropriate responses include, for example, disconnecting a nuisance call, providing operator assistance to a calling person or requesting correction of selected input information. Programming of the computerized system is readily adapted and customized since computer programs are provided to enable construction in a predetermined manner of the complete program from user selected software to implement telephonic dialogues for collecting the input information.

Further objects and advantages of the present invention, together with the organization and manner of operation thereof, will become apparent from the following detailed description of the invention when taken in conjunction with the accompanying drawings wherein like reference numerals designate like elements throughout the several views.

Brief Description of the Drawings

FIGURE 1 is a block diagram of hardware for one embodiment of a computerized information collection system;

FIGURE 2 is a functional block diagram of steps followed in the programming in a predetermined manner of a computerized information collection system;

FIGURE 3 is a functional block diagram of a mode of telephone call capture for a computerized information collection system; and

FIGURE 4 is a functional block diagram illustrating one operational mode of a computerized information collection system with the computer program implementation steps shown.

Description of Preferred Embodiments

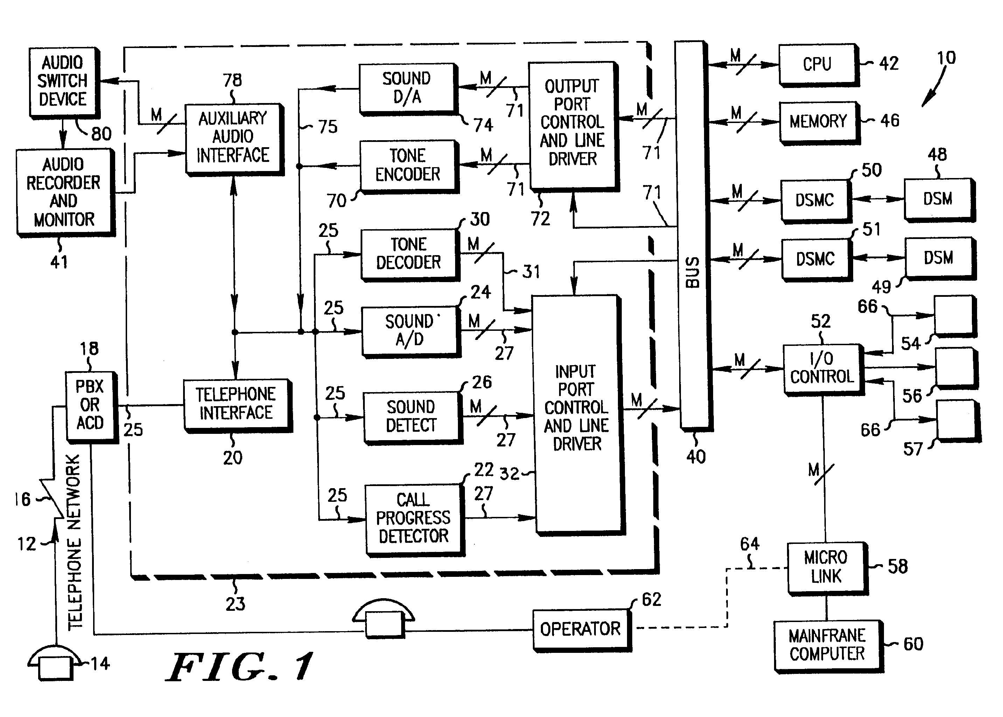

Referring now to the drawings and in particular to FIG. 1, a block diagram of an automated telephone interrogative system, or a computerized information collection communications system, constructed in accordance with one embodiment of the invention is indicated generally at 10. The computerized information collection communications system 10 (hereinafter, the computerized system 10) is responsive to a telephonically (or other communications devices coupling) connected person providing responses, such as an audio response 12, output from a telephone 14 (or other device for communicating with the computerized system 10) and carried over a telephone network 16 which includes a central office switching station. The audio response 12 is switched to the telephone number associated with the computerized system 10 by a local area switch 18, such as for example, a PBX or an automatic call distributor (see, for example, U.S. Patent No. 4,320,256 which is incorporated by reference herein). The switch 18 provides an audio response signal 25 as the modified form of the audio response 12. The appropriately directed audio response signal 25 is input to an interface means, such as a telephone interface component 20 (for example, a Novation model 490278, Novation, Inc., and conforming to part number sixty-eight of the FCC Rules). The telephone interface component 20 is the initial input component in a phone signal processing apparatus 23 to be discussed below (such as, for example, a CompuFone device, a product of Computalker Corp., Santa Monica, CA.). The telephone interface component 20 transmits the audio response signal 25 and acts as an analog bus to input the audio response signals 25 to an appropriate device.

The phone signal processing apparatus 23 includes various system components for operating on different types of inputs and outputs. In the case of inputs, for example, the audio response signal 25 is converted from analog to digital form by an analog to digital converter 24. The presence of sounds, such as the human voice or encoded tones, is sensed in the form of the audio response signal 25 by a sound detector 26. The level of sound sensed by the sound detector 26 will be useful in the telephonic dialogue between the computerized system 10 and the person, and this feature will be discussed in more detail hereinafter. The presence of an encoded tone for the audio response signal 25 is detected by a tone decoder 30 which converts the tone to digital form,, and will be useful in interpreting tone inputs by the person. A call progress detector 22 functions to detect ringing, busy, ring back signals and other signals generated by the telephone network 16.

If the audio response signal 25 is, for example, an encoded tone from a push button tone generating telephone, the encoded tone is input to the tone decoder 30 for conversion (as discussed above) to a decoded digitized form 31 and output to an input port controller and line driver 32 (for example, a component constructed per IEEE 696, or a Computalker S-100 Bus Product; Computalker Corp.). The input port controller and line driver 32 (hereinafter, the input controller/driver 32) manages the plurality of various inputs thereto, outputting signals to the appropriate location in the computerized system 10. The input controller/driver 32 is a single direction latch and address decoder which decodes the port address and allows the desired data to enter a bidirectional bus 40. The data is taken from the tone decoder 30 (or other selected device, such as the sound A/D converter 24, the sound detector 26 or the call progression detector 22) responsive to commands from a central processing unit 42 (discussed below) to the outport ports of the controller/driver 32. The data is then output responsive to instructions from the central processing unit 42 to a device, such as a storage means. The interconnections between various components include a multiplicity of lines which are indicated by a slash and "M" in FIG. 1.

The collection of input information (by, for example, recording means, such as an audio recorder and controller unit 41 to be discussed hereinafter) from the response of the person and the output of questions and comments from the computerized system 10 is controlled by computer means, such as the central processing unit 42 (for example, an Alpha Micro AM-100L, manufactured by Alpha Micro Corporation, which incorporates a Motorola Corporation MC 68000 central processing unit). The central processing unit 42 communicates through the bus 40 to the remainder of the computerized system 10. The central processing unit 42 is coupled to various storage means, such as for example, a memory 46 (for example, a RAM and also selectively ROM, PROM, EPROM and PLA) and is preferably an Alpha Micro Corporation AM 720, with 512Kbyte RAM. Other possible storage means are optical stoage discs and magnetic tape. Also coupled to the central processing unit 42 is a hard disc memory unit 48 (labelled DSM or digital storage memory in FIG. 1) having an associated digital storage medium controller (DSMC in FIG. 1) 50 (for example, an Alpha Micro Corpration, AM-435, 400 Mbyte hard disc unit and controller). The central processing unit 42 can also be combined with memory, an arithmetic logic unit and other components; and the combination can be replaced by any one of a plurality of commercially available microcomputer units, such as a Mizar 10 or an IBM XT. An alternate storage system can be a video cassette recorder 49, VCR Panasonic PV1225A, and includes a video cassette controller 51, such as an Alpha Micro Corp., AM-610.

Access to the computerized system 10 to monitor, modify, edit or add to the input information, or to input or construct audio information for the actual programming of the computerized system 10 (to be described in a separate section) is accomplished through input/output controller 52 (for example, an Alpha Micro Corporation AM-300, six port controller), coupled to various input/output means, such as, a keyboard/CRT terminal 54 (for example, an Alpha Micro AM 62A), a printer 56 (for example, an Alpha Micro AM 306) and a mouse/CRT combination 57.

Collection, analysis and editing of the input information, as well as the programming of the computerized system 10, can also be accomplished by inputs to (or outputs through) a mainframe interface link 58 (such as, for example, an IBM 3270PC microcomputer) to (from) a mainframe computer 60. The input information collected from the person by the computerized system 10 can be transcribed by the operator 62 onto the interface link 58 directly to the mainframe computer 60 by conversion into a digital form for analysis, and the input information can, for example, be used for placement of orders. The calls containing preliminary input information, such as telephone number and name, can also be screened by the operator 62 for call-back or verification by accessing the mainframe computer 60 through a connection 64. The mainframe computer 60 has extensive calculational powers, enabling some operations to be performed that would not be efficiently done or carried out rapidly enough on the central processing unit 42.

When the computerized system 10 has been connected with the person by, for example, answering a telephone call from the person, the dialogue typically begins with the computerized system 10 generating a prerecorded greeting to the person. The central processing unit 42 provides a sequence of digitized audio signals 71 responsive to predetermined audio information stored, for example, in the memory 46 and the hard disc memory unit 48. The sequence is predetermined to some degree, but depending on the complexity of branching possible in the computer program, there can be a large variety of paths taken by the dialogue in collecting the input information from the person. In particular the degree of branching is defined by the predetermined audio information and the programmed predetermined manner of operation (this process of programming the computerized system 10 will be described in detail hereinafter).

The predetermined audio information comprises computer software executable by the central processing unit 42 and prerecorded questions and comments digitized from a script, with selected portions to be presented in the dialogue with the calling person. The audio signals 71 are output from the central processing unit 42 to the bus 40 which transfers the audio signals 71 to an output port controller and a line driver 72 (hereinafter, the output controller/driver 72) which is a single direction latch identical in construction and function to the input controller/driver 32 described hereinbefore. The output controller/driver 72 outputs the audio signal 71 either to the tone encoder 70 (if the audio signal 71 is a digitized tone) or to an audio digital/analog converter 74 (if the audio signal 71 is a digitized voice output). Both the encoded DTMF output from the tone encoder 70 and the output from an audio digital/analog converter 74 comprise audio message signals 75. As described hereinbefore, the telephone interface component 20 transmits the audio message signal 75 from the computerized system 10 for final input to the telephone 14 to provide an audio output to the person.

## Programming of the Computerized Voice Communications Systems

The following discussion sets forth specific examples of programming features and detailed explanation of these features are set forth in the Appendix entitled "Digital Speech Announcer's Manual."

The computerized system 10 is prepared for collection of input information from the person connected thereto by a user carrying out a programming operation in a predetermined manner. The user programs the computerized system 10 through a user means, such as the keyboard/CRT terminal 54 or the mouse/CRT combination 57. The user means provides an input signal 66 responsive to a user input. The user develops a desired form for the predetermined manner, such as through a script sequence. In order to complete the programming of the computerized system 10 in the predetermined manner, the user also stores commands from the user input 66 to call up various computer software programs. The digitized forms of the user inputs 66 are thus stored in the hard disc storage unit 48 and incorporated as part of the computer program for implementing the dialogue between the person and the computerized system 10. The programming in the predetermined manner also include audio inputs (not shown) from the voice scripts mentioned above, comprising the questions and comments which are recorded by the audio recorder and controller unit 41 (for example, a Marantz PMD-220 audio cassette tape recorder, Marantz Corporation). The audio inputs are digitized by digitizing means, such as by appropriate computer software or by conventional A/D hardware converters, and stored in the hard disc storage unit 48. The prepared voice script includes the user selected universe of the audio inputs (which become the audio message signals 75) to be output from the computerized system 10 to the person during the telephonic dialogue. The assembled final program is therefore characteristic of the predetermined manner of operation and includes the incorporated user signals 66, the audio inputs and the various computer software programs. The assembled program is executed by the central processing unit 42 to perform the telephonic dialogue of collecting the desired input information from the person.

The predetermined manner of operation is executed with the assistance of an executive computer program which acts as a master control to guide the user through the necessary steps for establishing the dialogue, choosing among the alternative selectible courses of the dialogue and selecting from among the options for outputting questions and comments to the person, as well as the options presented to the person for collecting input information from the responses of the person. The user calls up the executive program which then sequences the user through the appropriate command requests to provide for various functionality as described in the specification and in the Computer Software Appendix of this specification. The executive program can be written in any one of a plurality of languages, including assembly language, BASIC, or in the preferred embodiment C-language, FORTRAN, and can operate under a plurality of commercially available operating systems, such as OS-9, CP/M-86, MS DOS, UNIX, or in the preferred embodiment the Alpha Micro-operating system, AMOS Revision 1.2 A, and can be executed on any one of a plurality of commercially available computing systems, such as the Mizar10 or IBM-XT.

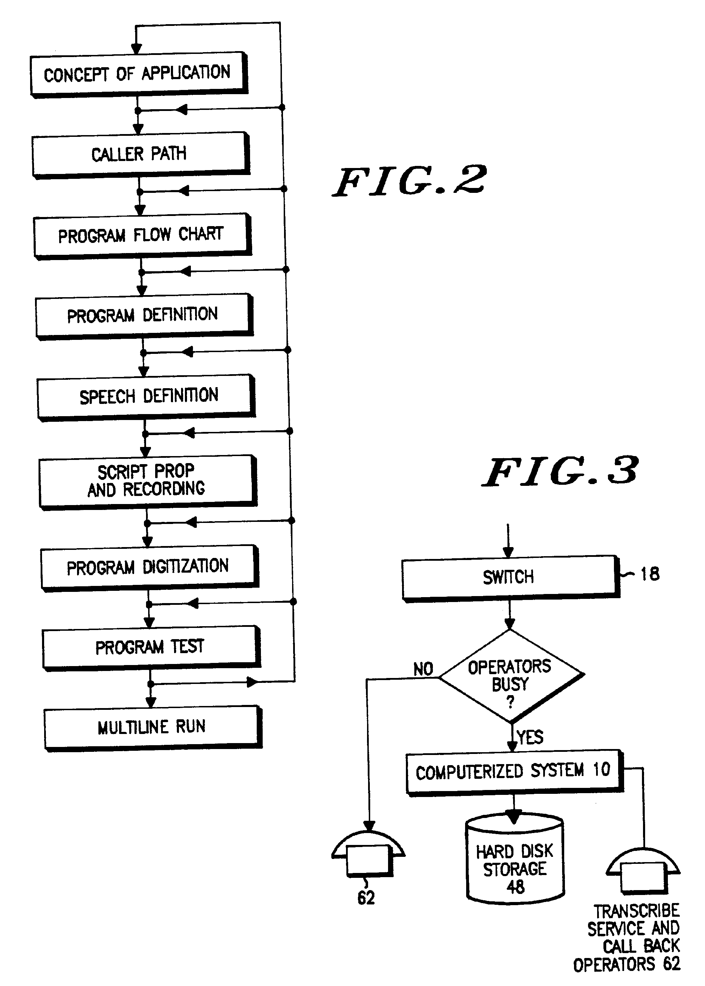

In FIG. 2 is illustrated a functional block diagram showing the steps of programming the computerized system 10 in the previously explained predetermined manner. The user conceptualizes the application in terms of the desired objective, such as capturing direct response telephone calls from a plurality persons. This objective can, for example, arise from insufficient agent capacity to capture a large volume of calls within a particular time period or a need to prescreen calls before calling back the person. In developing the program application it is important to prepare a general flow diagram for collecting the input information from the person in order to be certain to provide all the necessary functionalities. A simple example of a flow diagram is a call capture and call back application shown in FIG. 3. An incoming call from the person is input to the switch 18 which routes the call selectively to the operator 62 or to the computerized system 10 if all the operators 62 are occupied. In some forms of the invention the person, once connected to the computerized system 10, is given the option by the computerized system 10 to select either the operator 62 or the computerized system 10 to complete the call (this feature will also be discussed in more detail hereinafter). The calls routed directly to the operator 62 are processed in accordance with the level of interest of the person, whereas in the other branch all input information can be collected and stored in the hard disc memory 48 for subsequent screening.

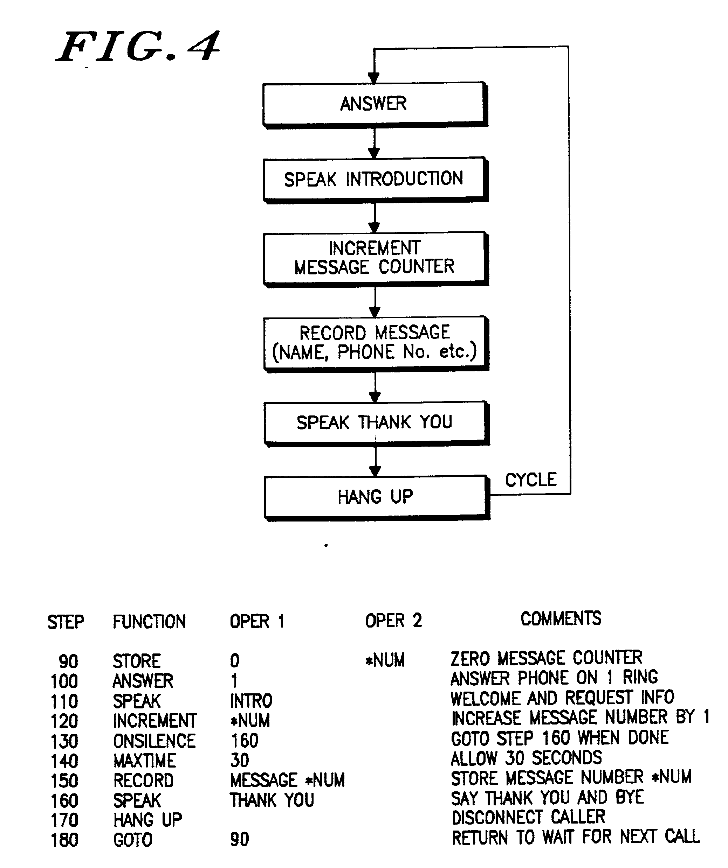

In developing the program application it is further necessary to develop a detailed flow chart as set forth in one example in FIG. 4, wherein the computerized system 10 answers the telephone call, a prerecorded greeting is output, a message counter is incremented to denote the running count of messages being taken, information is recorded, such as name, address and phone number, a closing statement is output, such as "thank you"; and the computerized system 10 is disconnected from the telephone line of the person. A program definition step performs the structuring of the program in a step by step sequencing of commands with appropriate functionalities. When programming the computerized system 10, the executive program guides the user through this procedure, including asking the name of the program and revision number and asking which software program is to be called up, to be explained and to be incorporated in a user constructed program of the predetermined manner of operation.

Various examples of computer software programs routinely called upon in the programming operation (and when executing the final program in operation of the computerized system 10) are: "ANSWER" which answers a call on a specified ring; "ASSIGN" which associates and correlates various input information for one person; "DECREMENT" which decreases a specified variable by one; "DELETE" which deletes a specific or single piece of digitized input information from a hard disc; "DIAL" which dials a specific phone number; "GOTO" which unconditionally transfers to a specified step number; "HANGUP" which disconnects the person from the computerized system 10; "IF" which conditionally transfers the person to a specified step number; "INCREMENT" which increases a specified variable by one; "MAXTIME" which assigns a maximum time in seconds allowed for a caller to provide a specific or single response to the computerized system 10; "ONHANGUP" which transfers to a specific step number upon detecting the disconnection of the person during the dialogue; "ONSILENCE" which transfers to a specific step number upon detection of a specified length of silence during the dialogue; "ONTONE" which detects tone entry during the dialogue, interrupting the function and transferring to a specific step; "READD" which reads numeric data from a file into a variable; "RECORD" which digitizes the audio responses from a person and stores the digitized input information on a hard disc; "SPEAK" which outputs a specified digitized speech file; "SPEAKD" which outputs files selectively from a group of ten speech files; "STORE" which assigns the specified value of a numeric constant or variable to another variable; "TONECNT" which allows the entry of a particular number of DTMF tones from a calling person, to decoding these into their numeric value and storing the resulting digits in a variable location; "TONEMAX" which sets a maximum time limit for entry of the first tone; "TRANSFER" which transfers the caller to a specified phone number and continues the program; and "WRITED" which saves numeric data from a variable into a file.

The step of speech definition in FIG. 2 defines speech files and data files identified in the program definition step. Speech files are files identified by the "DELETE," "SPEAK," "SPEAKD" and "RECORD" functions. Data files are files identified by the "READD" and "WRITED" functions for storage of data received from tone responses from the person or other variables (such as, date and time).

In the step of script preparation and recordation the script content must be carefully assembled. The script is recorded either directly over a telephone input to the computerized system 10 or by the separate audio recorder and monitor 41 (such as the Marantz PMD-220, described hereinbefore) and then converted to the digitized response signal 27 in a conventional manner and stored in the hard disc storage consistancy unit 48. Once the digitized response signal 27 is in the hard disc storage unit 48, the central processing unit 42 can access the stored digitized response signal 27 and the quality and impression on the listener of the recorded script can be checked. Monitoring can be performed using the keyboard/CRT terminal 54 and a coupled audio output device, such as a telephone.

The next step in the programming operation is a program test run. When the user enters this phase, the executive program requests the program name and revision number the user wishes to execute. The program then requests the date and the channel number on which to accept a telephone call. As the program is run, the video display of the keyboard/CRT terminal 54 displays the current active step being executed and its associated function and operand, as well as associated speech file names.

In the final step of Run Multiline the computer software used to carry out the dialogue is put into a full operational mode with multiple phone lines and multiple program or dialogue definitions. This therefore allows the simultaneous collection of input information from a plurality of different persons through a dialogue between each of the persons and one of a plurality of respective associated sets of the audio message signals 75 output from the computerized system 10. Consequently, the central processing unit 42 responsive to the predetermined audio information stored in the hard disc storage unit 48 provides simultaneously a plurality of the audio message signals 75 with each set provided to the associated respective person. The sets of the audio message signals 75 can selectively be the same set, completely different sets and mixtures thereof provided to the plurality of different persons.

Information Collection Functionality

Operation of the computerized system 10 is carried out by the central processing unit 42 implementing a telephonic dialogue between the person connected to the computerized system 10. The central processing unit 42 is activated upon connection to the person, and the computerized system 10 provides a preselected sequence of the audio message signals 75 ultimately responsive to the predetermined audio information stored in the hard disc storage unit 48. The predetermined audio information preferably includes in part various computer software programs for performing selected functions in the dialogue between the person and the computerized system 10. In other forms of the invention the computer software programs can be replaced by dedicated hardware modules for carrying out the various functionalities. The computer software programs and the concepts contained therein are described hereinbelow for various exemplary functionalities, and source code for the various computer software programs is included as an Appendix to this specification.

A. Audio Information Input Options

The computerized system 10 includes audio means (such as, for example, the analog to digital audio converter 24, the digital to snalog audio converter 74, the tone decoder 30 and the tone encoder 70 and the sound detector 26). In the mode of responding to the person, as described in the hardware discussion, selected components of the audio means operate to output selected ones of the audio message signals 75 from the computerized system 10 responsive to the audio signals 71. The central processing unit 42 provides these audio signals 71 responsive to the predetermined audio information stored in the hard disc storage unit 48. The audio message signals 75 include selectable options for ways in which the person can provide the input information to the computerized system 10. These input options presented to the person include, for example, speaking to an operator 62, speaking to the computerized system 10 resulting in storage of the response in digital form in the hard disc storage unit 48, and providing encoded data entries, such as by using tone generating pads of a push button form of the telephone 14.

B. Editing Options

In one aspect of the invention the person connected to the computerized system 10 is provided the ability to selectively verify, correct, edit and add further to the input information provided by the responses of the person. The central processing unit 42 responsive to the predetermined audio information provides in the audio message signals 75 to the person these various selectable options. The computerized system 10 can also selectively request verification of the input information, analyze the input information to determine the correctness thereof and inform the person through output of the audio message signals 75 of apparent errors in the input information or a need for additional information. In another aspect of the invention the user can edit the predetermined audio information to correct, add or further modify the audio information. This can, for example, be done by the user, or by the audio recorder and monitor 41 thru auxiliary audio interface 78. Computer software can be used to implement these functionalities and the relevant computer software programs are set forth in the Appendix.

C. Statistical Associated Information

The computerized system 10 is useful for collecting a variety of input information, including, but not limited to, sales of goods or services from the responses of the person in the telephonic dialogue. During the dialogue the computerized system 10 generates a plurality of preselected questions and comments to collect the variety of input information. This input information can include coupled, associated marketing information, sales information and shipping information. The input information for the particular person is associated and coupled (such as by flag identification bits for each data entry associated with the person) to the person throughout

7

various data files (or to some other chosen variable, such as location or time of day). Thus, cross correlation can be made to a marketing file concerned with the frequency of telephone calls and successful sales for various geographic regions and determined for different time periods (season, day and time of day).

Association and cross correlation can also be keyed to variables besides a person, such as geographic region or time. A sales file can be constructed in terms of sales statistics on the time required to complete a dialogue and the number of sales closes in the automated mode without any operator intervention, as compared to partial or total operator involvement. Numerous variables can be studied and correlated to derive optimum sales benefits. Having available this type of extensive cross correlation ability enables substantial statistical information to be developed from the responses of the persons. Using the mainframe computer 60, detailed sales and marketing models can be developed using the above discussed type of statistical information. Computer software to implement these various functionalities is set forth in the Appendix.

### D. Beginning and Ending of Input Information Collection

In order to be most efficient while remaining conversational during the collection of the input information in an automatic mode (at least for part of the time), the collecting means, such as an audio recorder and monitor 41 is selectively activated upon completing the preselected questions and comments. In some forms of the invention, activation of the collecting means can also require entry of a security code to gain access to the computerized system 10. The collecting means is deactivated upon achieving one or more predetermined conditions including, for example: (a) exceeding a preselected and user changeable silence time period while the sound level is below a predetermined audio threshold level, (b) the person inputting a specific number of user inputs or a particular user response (such as, for example, inputting ten tone entries for a phone number, no tone inputs being provided when some are expected and entering an improper security code to a system having access limited to appropriate parties and (c) the person continuing to provide responses after a particular time period has elapsed. Computer software to implement examples of some of these various functionalities is in the Appendix.

### E. Error Count

The significance and usefulness of the input information provided in the telephonic dialogue can be scrutinized, both during the dialogue and also after collecting the input information, by counting and categorizing errors made by the person. The hard disc storage unit 48, or other such storage device, can store predetermined error counts characteristic of the number and weight of various errors made in the responses of the person. The computerized system 10 can be operated either to count the errors and later evaluate the input information and/or to provide feedback in the audio message signals 75 presented to the person to enable correction of errors, branching to the operator 62 for assistance or terminating the call due either to the excessive number of errors or to the type of errors.

This functionality can also be coupled to the presence of unexpected periods of silence, such as no response at all or an insufficient duration of response to a question. The response expected can also be a DTMF input, a voice input or even a data input. Thus, for example, if no response is given after two requests for a name, phone number and address, the computerized system 10 could choose to disconnect from the person. Computer software to implement these functionalities is in the Appendix.

While preferred embodiments of the present invention have been illustrated and described, it will be understood that changes and modifications can be made without departing from the invention in the broader aspects. Various features of the invention are set forth in the following claims.

### Digital Speech Announcers Users Manual Appendix

This appendix includes all operating instructions for implementing one preferred embodiment of the computerized collection communications system.

## Computer Software Appendix Title Page

DS 01                     Program Definition Option
DS 02                     Speech Definition Option
DS 05                     Program Digitizing Option
DS 06                     Program Test Option
DS 18 + DS 19             Run Multiline Option

Transend                  Marketing Information
Totals                    Marketing Information


The following are the main software modules as described in the DSA Users Manual Appendix, Chapters 5, 6, 8, 9 and 10, and can be found from the title pages and comments provided within. All associated supporting software, including any subroutines or associated utility programs, are also included.

## Claims

1.  A computerized communications system (10) for collecting input information from audio responses of a person in a telephonic dialogue between the person and said system, comprising :
    means (16) for connecting the person to said computerized communications system (10);
    means (46, 48) for storing predetermined audio information; computer means (42) for providing a sequence of audio signals responsive to said predetermined audio information;
    audio means (24, 74, 30, 70, 26) for outputting selected audio message signals (75) to the person responsive to said audio signals (71) and for collecting said input information (12), characterized in that said audio means (24, 74, 30, 70, 26) comprises a telephone signal processing apparatus (23) including a telephone interface means (20), an audio message signal emitting means (72, 74, 70) for emitting audio message signals to the person including selectable options for inputting input information, and input information processing means (22, 24, 26, 30, 32) for recognizing the option for inputting said input information selected by said person, said input information processing means comprising a sound detector (26) and a tone decoder (30).

2.  The system as defined in claim 1 wherein said selectable options comprise speaking to an operator (62), speaking to a recording device, inputting said input information to storage means (48), generating encoded tone entries and outputting data.

3.  The system as defined in claim 1 wherein said predetermined audio information comprises computer software and sets of prerecorded digitized scripts.

4.  The system as defined in claim 1 further including a coupled mainframe computer (60), said input information being (12) transcribed to said mainframe computer for analysis and action thereon.

5.  A computerized communications system (10) according to claim 1, characterized in that said computer means (42) are responsive to said predetermined audio information for generating in said audio message signals (75) the option to selectively verify, correct, edit and add to said input information (12).

6.  A computerized communications system (10) according to claim 5, characterized in that
    said input information processing means (22, 24, 26, 30) are adapted for processing the responses of the person for input to and analysis by said computer means (42, 60); and in that
    said computer means are adapted for analyzing said input information to determine the correctness thereof and outputting an appropriate audio signal to said audio means to provide the person with said audio message signals (75) to selectively indicate the need for any additional input information (12).

7.  The system as defined in claim 6 wherein said computer means (42) responsive to said predetermined audio information provides the person the option of selectively verifying and changing said input information (12).

8. The system as defined in claim 6 wherein analyzation by said computer means (42) further includes analyzing the completeness of said input information (12).

9. The system as defined in claim 6 wherein said predetermined audio information includes computer software.

10. A computerized communications system (10) according to claim 1, characterized in that
said computer means (42) are adapted for providing a plurality of predetermined sequences of audio signals (71) responsive to said predetermined audio information;
said audio means (24, 74) being adapted to be responsive to said sequence of audio signals (71);
and in that it comprises interface means (20) for transmitting said audio responses from the person for input to said computerized system and for transmitting said selected audio message signals (75) from said audio means for output to the telephone (14) of the person.

11. The computerized system as defined in claim 1 or 10 wherein said audio means further comprises an analog to digital audio converter (24), and a digital to analog audio converter (74).

12. A computerized system according (10) to claim 1, for collecting a variety of input information (12) including sales of goods or services by responses from a person in a telephonic dialogue between the person and said computerized system (10), characterized in that it comprises;
means (42) for generating a plurality of preselected questions and comments designed to elicit from the person said variety of input information (12), including associated marketing information, sales information and shipping information which relate to said sales of goods or services; wherein the
means for collecting (32, 40, 42) said input information from said person is adapted to collect input information responsive to said preselected questions and comments.

13. The system as defined in claim 12 wherein said questions and comments include options presented to the person to selectively verify, correct and add to said variety of information.

14. The system as defined in claim 12 wherein said means for generating questions comprises audio means (24, 74) for outputting audio message signals (75) to the person and computer means (42) for providing a predetermined sequence of questions or comments to the person.

15. The system as defined in claim 12 wherein said collecting means (32, 40) comprises means (48) for selectively storing and recording said input information.

16. A computerized system (10) according to claim 1, characterized in that it comprises
means (42) for generating a plurality of preselected questions or comments designed to elicit from the person said responses providing said input information;
wherein said means (32, 40, 42) for collecting said input information is adapted to collect from the person said responses to said preselected questions or comments, said collecting means being activated in response to completion of each said preselected question or comment and said collecting means being deactivated upon achieving predetermined conditions comprising at least one of : (a) exceeding a preselected silence time period for said responses being below a predetermined audio threshold level during said preselected period, (b) the person inputting a specific one of said response, (c) the person inputting a particular one of said responses and (d) the person continuing to provide said responses after a particular time period has elapsed.

17. The system as defined in claim 16 wherein said collecting means comprises an audio recording means.

18. The system as defined in claim 16 wherein said collecting means comprises means for recording encoded ones of said responses.

19. The system as defined in claim 16 wherein said means for generating questions includes computer means (42) responsive to said responses for generating a next sequence of said preselected questions and comments dependent on the nature of said responses (12).

20. The system as defined in claim 19 wherein said next sequence comprises terminating said questions and comments if said responses results in achieving at least one of a plurality of predetermined conditions.

**21.** A computerized communications system (10) according to claim 1, characterized in that said means (46, 48) for storing predetermined audio information includes a portion storing a set of predetermined error counts characteristic of the number and weight of various errors in said responses of the person;

and in that said computer means (42) are adapted for analyzing said responses and said input information to determine the errors committed in said responses by the person and for outputting associated audio message signals (75) characteristic of said predetermined error counts when the number and weight of the errors committed by the person coincides with ones of said predetermined error counts.

**22.** The system as defined in claim 21 wherein said audio means (24, 74) further provides to the person in said audio message signals (75) selected options for providing said audio information to said system.

**23.** The system as defined in claim 21 wherein said responses of the person selectively comprise at least one of an audio response by the person and a tone encoded response.

**24.** A computerized communications system (10) according to claim 21, characterized in that said computer means (42) is adapted for analyzing said input information (12) to determine the errors committed in said responses by the person and for disconnecting said computerized system (10) from the caller when the errors at least equal said predetermined caller error count.

**25.** An apparatus for user programming in a predetermined manner in a computerized communications system according to claim 1 to automatically collect input information (12) in a telephonic dialogue between a person and said computerized system (10), characterized in that it comprises :

user means (14) for providing an input signal (12) responsive to a user input;

means for recording an audio input (12);

means (24) for digitizing said audio input (12);

storage means (48) for storing executive programming information and also for storing said digitized audio input and computer programs characteristic of said predetermined manner of programming; and

computer means (42) responsive to said input signals for programming said computerized system (10) in said predetermined manner and responsive to said computerized system telephonically connecting to the person, said computer means executing selected ones of said computer programs and selectively retrieving and using portions of said digitized audio input in accordance with said predetermined manner to perform said telephonic dialogue and collect said input information.

**26.** The apparatus as defined in claim 25 wherein said user input comprises at least one of an audio input (12) and a tone coded input.

**27.** The apparatus as defined in claim 25 wherein said digitizing means comprises at least one of a hardware system (24) and said computer means responsive to selected computer software.

**28.** A computerized communications system (10) according to claim 1 for simultaneously collecting input information (12) from a plurality of different persons through a dialogue between each of the persons and one of a plurality of respective associated sets of audio message signals (75) output from said system, characterized in that it comprises :

means (16) for connecting each of said persons to said computerized system;

said computer means (42) being adapted for simultaneously providing a plurality of sets of audio signals (71) to said plurality of persons, each said set associated with a respective one of the persons;

said audio means (24, 74) being adapted for outputting each said respectively associated set of audio message signals (75) to the respectively associated person responsive to said audio signals (12).

**29.** The system as defined in claim 28 wherein said plurality of sets comprise selectively the same set, different sets and mixtures thereof output to said plurality of persons.

**Patentansprüche**

**1.** Rechnergesteuertes Kommunikationssystem (10) zum Sammeln von Eingangsinformationen aus hörbaren Schalleistungen einer Person in einem telephonischen Dialog zwischen der Person und dem System, mit:

einer Einrichtung (16) zum Verbinden der Person mit dem rechnergesteuerten Kommunikationssystem (10);

einer Einrichtung (46, 48) zum Speichern von vorbestimmten Audioinformationen: Rechnereinrichtungen (42) zum Liefern einer Folge von Audiosignalen auf Grund der vorbestimmten Audioinformationen;

eine Audioeinrichtung (24, 74, 30, 70, 26) zur Ausgabe ausgewählter Audiomitteilungssignale (75) an die Person auf Grund der Audiosignale (71) und zum Sammeln der Eingangsinformationen (12), dadurch gekennzeichnet, daß die Audioeinrichtung (24, 74, 30, 70, 26) ein Verarbeitungsgerät (23) für ein Telephonsignal einschließlich einer Telephon-Interfaceeinrichtung (20), eine Ausgabeeinrichtung (72, 74, 70) für Audiomitteilungssignale zur Aussendung von Audiomitteilungssignalen an die Person, einschließlich auswählbarer Optionen zur Eingabe von Eingangsinformationen, und Verarbeitungseinrichtungen (22, 24, 26, 30, 32) für die Eingangsinformationen zum Erkennen der von der Person ausgewählten Option für die Eingabe der Eingangsinformationen umfaßt, wobei die Verarbeitungseinrichtungen für die Eingangsinformationen einen Schalldetektor (26) und einen Ton-Decoder (30) aufweisen.

2. System nach Anspruch 1, bei dem die auswählbaren Optionen das Sprechen zu einer Bedienungsperson (62), das Sprechen zu einer Aufnahmeeinrichtung, die Eingabe der Eingangsinformationen an die Speichereinrichtung (48), die Erzeugung von Einträgen codierten Tones und die Ausgabe von Daten umfassen.

3. System nach Anspruch 1, bei dem die vorbestimmten Audioinformationen Computer-Software und Sätze von vorher aufgezeichneten digitalisierten Texten umfaßt.

4. System nach Anspruch 1, welches ferner eine gekoppelte Hauptrechnereinheit (60), wobei die Eingangsinformationen (12) in die Hauptrechnereinheit zur Analyse und zum Einwirken darauf eingeschrieben wird.

5. Rechnergesteuertes Kommunikationssystem (10) nach Anspruch 1, dadurch gekennzeichnet, daß die Rechnereinrichtungen (42) auf die vorbestimmten Audioinformationen zum Erzeugen der Option in den Audiomitteilungssignalen (75) ansprechen, wahlweise sie zu verifizieren, zu korrigieren, zu editieren und der Eingangsinformationen (12) hinzuzufügen.

6. Rechnergesteuertes Kommunikationssystem (10) nach Anspruch 5, dadurch gekennzeichnet, daß

die Verarbeitungseinrichtungen (22, 24, 26, 30, 32) für die Eingangsinformationen zum Verarbeiten der Antworten der Person zur Eingabe und zur Analyse durch die Rechnereinrichtung (42, 60) ausgebildet sind; und daß

die Rechnereinrichtungen zum Analysieren der Eingangsinformationen ausgebildet sind, um ihre Richtigkeit zu bestimmen und zur Ausgabe eines entsprechenden Audiosignales an die Audioeinrichtung, um die Person mit den Audiomitteilungssignalen (75) zu versorgen, um wahlweise den Bedarf an zusätzlichen Eingangsinformationen (12) anzuzeigen.

7. System nach Anspruch 6, bei dem die auf die vorbestimmten Audioinformationen ansprechenden Rechnereinrichtungen (42) die Person die Option einer wahlweisen Verifizierung und einer Veränderung der Eingangsinformationen (12) liefern.

8. System nach Anspruch 6, bei dem die Analysierung durch die Rechnereinrichtungen (42) ferner die Analysierung der Vollständigkeit der Eingangsinformationen (12) umfaßt.

9. System nach Anspruch 6, bei dem die vorbestimmten Audioinformationen Computer-Software umfassen.

10. Rechnergesteuertes Kommunikationssystem (10) nach Anspruch 1, dadurch gekennzeichnet, daß die Rechnereinrichtungen (42) zum Liefern einer Mehrzahl vorbestimmter Sequenzen von Audiosignalen (71) auf Grund der vorbestimmten Audioinformationen ausgebildet sind;

die Audioeinrichtungen (24, 74) zum Ansprechen auf die Sequenz von Audiosignalen (71) ausgebildet sind;

und daß es Interface-Einrichtungen (20) zum Übermitteln der Audioantworten von der Person zur Eingabe an das rechnergesteuerte System und zum Aussenden der ausgewählten Audiomitteilungssignale (75) aus der Audioeinrichtung zur Ausgabe an das Telephon (14) der Person aufweist.

11. Rechnergesteuertes System (10) nach Anspruch 1 oder 10, bei dem die Audioeinrichtung ferner einen Audio-Analog/Digital-Wandler (24) aufweist, sowie einen Audio-Digital/Analog-Wandler (74).

12. Rechnergesteuertes System (10) nach Anspruch 1 zum Sammeln verschiedener Eingangsinformationen (12) einschließlich des Warenverkaufes bzw. der Dienstleistungen durch die Antworten einer Person in einem telephonischen Dialog zwischen der Person und dem rechnergesteuerten System (10), dadurch gekennzeichnet, daß es aufweist:

eine Einrichtung zum Erzeugen einer Mehrzahl vorausgewählter Fragen und Kommentare, die darauf gerichtet sind, aus der Person die verschiedenen Eingangsinformationen (12), einschließlich von zugehörigen Marketinginformationen, Verkaufsinformationen und Versandinformationen herauszubringen, die sich auf die Verkäufe und Waren oder Dienstleistungen bezieht; wobei die

Einrichtung (32, 40, 42) zum Sammeln der Eingangsinformationen von der Person zum Sammeln der Eingangsinformationen auf Grund der vorausgewählten Fragen und Kommentare ausgebildet ist.

13. System nach Anspruch 12, bei dem die Fragen und Kommentare der Person präsentierte Optionen zum wahlweisen Verifizieren, Korrigieren und Hinzufügen zu den verschiedenen Informationen aufweist.

14. System nach Anspruch 12, bei dem die Fragen erzeugende Einrichtung eine Audioeinrichtung (24, 74) zur Ausgabe von Audiomitteilungssignalen (75) an die Person sowie Rechnereinrichtungen (42) zum Liefern einer vorbestimmten Aufeinanderfolge von Fragen und Kommentaren an die Person umfaßt.

15. System nach Anspruch 12, bei dem die Sammeleinrichtung (32, 40) eine Einrichtung (48) zum wahlweisen Speichern und Aufzeichnen der Eingangsinformationen aufweist.

16. Rechnergesteuertes System (10) nach Anspruch 1, dadurch gekennzeichnet, daß es folgendes aufweist:

eine Einrichtung (42) zum Erzeugen einer Mehrzahl vorausgewählter Fragen oder Kommentare, die darauf gerichtet sind, aus der Person die die Eingangsinformationen liefernden Antworten herauszubringen;

wobei die Einrichtung (32, 40, 42) zum Sammeln der Eingangsinformationen zum Sammeln der Antworten der Person auf die vorausgewählten Fragen oder Kommentare ausgebildet ist, und wobei die Sammeleinrichtung auf Grund des Abschlusses jeder vorausgewählten Frage bzw. jedes vorausgewählten Kommentares aktiviert wird und die Sammneleinrichtung beim Erreichen vorbestimmter Bedingungen deaktiviert wird, welche wenigstens eine der folgenden umfaßt:

a) das Übersteigen einer vorgewählten Ruhezeitdauer für die Antworten, welche während dieser vorgewählten Dauer unterhalb eines vorbestimmten Audioschwellwertes liegt, (b) die Eingabe einer spezifischen Antwort durch die Person, (c) die Eingabe einer speziellen Antwort durch die Person und (d) Fortsetzung der Lieferung der Antworten durch die Person, nachdem eine besondere Zeitspanne verstrichen ist.

17. System nach Anspruch 16, bei der die Sammeleinrichtung eine Audio-Aufnahmeeinrichtung aufweist.

18. System nach Anspruch 16, bei der die Sammeleinrichtung eine Einrichtung zum Aufzeichnen von codierten Antworten aufweist.

19. System nach Anspruch 16, bei der die Einrichtung zum Erzeugen von Fragen auf die Antworten ansprechende Rechnereinrichtungen (42) zum Erzeugen einer nächsten Aufeinanderfolge der vorausgewählten Fragen und Kommentare, je nach der Art der Antworten (12) aufweist.

20. System nach Anspruch 19, bei der die nächste Aufeinanderfolge das Beendigen der Fragen und Kommentare umfaßt, wenn die Antworten zum Erreichen wenigstens einer von einer Mehrzahl von vorbestimmten Bedingungen führt.

21. Rechnergesteuertes Kommunikationssystem (10) nach Anspruch 1, dadurch gekennzeichnet, daß

die Einrichtung (46, 48) zum Speichern von vorbestimmten Audioinformationen einen Teil aufweist, der einen Satz von vorbestimmten Fehlerzählern speichert, welche für die Anzahl und die Gewichtung verschiedener Fehler in den Antworten der Person charakteristisch ist;

und daß die Rechnereinrichtungen (42) zum Analysieren der Antworten und der Eingangsinformationen ausgebildet sind, um die in den Antworten von der Person begangenen Fehler zu bestimmen und zur Ausgabe zugehöriger Audiomitteilungssignale (75), die für die vorbestimmten Fehlerzähler charakteristisch sind, wenn die Anzahl und die Gewichtung der von der Person begangenen Fehler mit einem der vorbestimmten Fehlerzähler übereinstimmt.

22. System nach Anspruch 21, bei dem die Audioeinrichtung (24, 74) der Person in den Audiomitteilungssignalen (75) ferner ausgewählte Optionen zum Liefern der Audioinformationen an das System schafft.

23. System nach Anspruch 21, bei dem die Antworten der Person wahlweise zumindest eine der Audioantworten von der Person und eine toncodierte Antwort aufweist.

24. Rechnergesteuertes Kommunikationssystem (10) nach Anspruch 21, dadurch gekennzeichnet, daß
die Rechnereinrichtung (42) zum Analysieren der Eingangsinformationen (12) ausgebildet ist, um die in den Antworten von der Person begangenen Fehler zu bestimmen und Abschalten der Verbindung des rechnergesteuerten Systems (10) vom Anrufer, wenn die Fehler wenigstens gleich dem vorbestimmten Fehlerzählers des Anrufers ist.

25. Vorrichtung für eine Anwenderprogrammierung in einer vorbestimmten Weise bei einem rechnergesteuerten Kommunikationssystem nach Anspruch 1, um in einem telephonischen Dialog zwischen einer Person und dem rechnergesteuerten System (10) die Eingangsinformationen (12) automatisch zu sammeln, dadurch gekennzeichnet, daß sie folgendes aufweist:
eine Anwendereinrichtung (14) zum Liefern eines Eingangssignales (12) auf Grund einer Anwendereingabe;
eine Einrichtung zum Aufzeichnen eines Audioeingangssignales (12);
eine Einrichtung (24) zum Digitalisieren des Audioeingangssignales (12);
eine Speichereinrichtung (48) zum Speichern von Ausführungsprogramminformationen und auch zum Speichern des digitalisierten Audioeingangssignales sowie der Rechnerprogramme, die für die vorbestimmte Weise der Programmierung charakteristisch sind; und
Rechnereinrichtungen (42), die auf die Eingangssignale zum Programmieren des rechnergesteuerten Systems (10) in der vorbestimmten Weise ansprechen und die auf das rechnergesteuerte System ansprechen, welches telephonisch mit der Person verbindet, welche Rechnereinrichtungen aus den Rechnerprogrammen davon ausgewählte ausführen und wahlweise Teile des digitalisierten Audiosignales entsprechend der vorbestimmten Weise wieder auffinden und anwenden, um den telephonischen Dialog durchzuführen und die Eingangsinformationen zu sammeln.

26. Vorrichtung nach Anspruch 25, bei der die Anwendereingabe zumindest eines aus einem Audioeingangssignal (12) und einem toncodierten Eingangssignal umfaßt.

27. Vorrichtung nach Anspruch 25, bei der die Digitalisierungseinrichtung wenigstens eine aus einem Hardwaresystem (24) sowie die auf ausgewählte Rechner-Software ansprechenden Rechnereinrichtungen aufweist.

28. Rechnergesteuertes Kommunikationssystem (10) nach Anspruch 1, zum gleichzeitigen Sammeln von Eingangsinformationen (12) von einer Mehrzahl verschiedener Personen durch einen Dialog zwischen einer jeden Person und einem aus einer Mehrzahl von jeweils zugeordneten Sätzen von Audiomitteilungssignalen (75) als Ausgang aus dem System, dadurch gekennzeichnet, daß es folgendes aufweist:
eine Einrichtung (16) zum Verbinden einer jeden der Personen mit dem rechnergesteuerten System;
wobei die Rechnereinrichtungen (42) zum gleichzeitigen Liefern einer Mehrzahl von Sätzen von Audiosignalen (71) an die Mehrzahl von Personen ausgebildet sind, wovon ein jeder Satz jeweils einer der Personen zugeordnet ist;
und wobei die Audioeinrichtung (24, 74) zur Ausgabe eines jeden der jeweils zugeordneten Sätze von Audiomitteilungssignalen (75) an die jeweils zugeordnete und auf die Audiosignale (12) ansprechende Person ausgebildet ist.

29. System nach Anspruch 28, bei dem die Mehrzahl von Sätzen wahlweise denselben Satz, unterschiedliche Sätze und Mischungen davon als Ausgang an die Mehrzahl von Personen aufweist.

## Revendications

1. Système de communication informatisé (10) pour collecter des informations d'entrée à partir des réponses audio-fréquences d'une personne pendant un dialogue téléphonique entre les personnes et ledit système, comprenant :
   un moyen (16) pour connecter la personne audit système de communication informatisé (10),
   un moyen (46, 48) pour mémoriser les informations audio-fréquences prédéterminées, un moyen d'ordinateur (42) pour délivrer une séquence de signaux audio-fréquences répondant auxdites informations audio-fréquences prédéterminées,
   un moyen audio-fréquences (24, 74, 30, 70, 26) pour sortir des signaux de message audio-fréquences sélectionnés (75) vers la personne répondant auxdits signaux audio-fréquences (71) et pour collecter lesdites informations d'entrée (12), caractérisé en ce que ledit moyen audio-fréquences (24, 74, 30, 70, 26) comprend un dispositif de traitement de signaux téléphoniques (23) comportant un moyen d'interface téléphonique (20), un moyen d'émission de signaux de message audio-fréquences (72, 74, 70) pour émettre des signaux de message audio-fréquences à la personne comportant des options sélectionnables pour entrer les informations d'entrée et un moyen de traitement d'informations d'entrée (22, 24, 26, 30, 32) pour reconnaître l'option pour entrer lesdites informations d'entrée sélectionnées par ladite personne, ledit moyen de traitement d'informations d'entrée comprenant un détecteur de son (26) et un détecteur de tonalité (30).

2. Système selon la revendication 1, dans lequel lesdites options sélectionnables comprennent le dialogue avec un opérateur (62), le dialogue avec un dispositif d'enregistrement, l'entrée desdites informations d'entrée sur un moyen de mémorisation (48), la production d'entrées de tonalités codées et la sortie de données.

3. Système selon la revendication 1, dans lequel lesdites informations audio-fréquences prédéterminées comprennent un logiciel d'ordinateur et des ensembles de scénarios numérisés pré-enregistrés.

4. Système selon la revendication 1, comportant de plus un ordinateur central couplé (60), lesdites informations d'entrée (12) étant transcrites dans l'ordinateur central pour analyse et action sur celui-ci.

5. Système de communication informatisé (10) selon la revendication 1, caractérisé en ce que ledit moyen d'ordinateur (42) est sensible auxdites informations audiofréquences prédéterminées pour produire dans lesdits signaux de message audio-fréquences (75) l'option pour sélectivement vérifier, corriger, éditer et ajouter des informations d'entrée (12).

6. Système de communication informatisé (10) selon la revendication 5, caractérisé en ce que
   lesdits moyens de traitement d'informations d'entrée (22, 24, 26, 30) sont prévus pour traiter les réponses de la personne pour entrée et analyse par ledit moyen d'ordinateur (42, 60) et en ce que
   lesdits moyens d'ordinateur sont prévus pour analyser lesdites informations d'entrée afin de déterminer la validité de celles-ci et sortir un signal audio-fréquences approprié vers ledit moyen audio-fréquences afin de délivrer à la personne lesdits signaux de message audio-fréquences (75) pour indiquer sélectivement le besoin de toute information d'entrée supplémentaire quelconque (12).

7. Système selon la revendication 6, dans lequel ledit moyen de l'ordinateur (42) répondant auxdites informations audio-fréquences prédéterminées délivre à la personne l'option consistant à vérifier et changer sélectivement lesdites informations d'entrée (12).

8. Système selon la revendication 6, dans lequel l'analyse par ledit moyen d'ordinateur (42) comporte de plus l'analyse de l'achèvement desdites informations d'entrée (12).

9. Système selon la revendication 6, dans lequel lesdites informations audio-fréquences prédéterminées comportent un logiciel d'ordinateur.

10. Système de communication informatisé (10) selon la revendication 1, caractérisé en ce que
    lesdits moyens d'ordinateur (42) sont prévus pour délivrer une multitude de séquences prédéterminées de signaux audio-fréquences (71) en réponse auxdites informations audio-fréquences prédéterminées,
    lesdits moyens audio-fréquences (24, 74) étant prévus pour être sensibles à ladite séquence de signaux audio-fréquences (71),

et en ce qu'il comprend un moyen d'interface (20) pour transmettre lesdites réponses audio-fréquences à partir de la personne pour entrer dans ledit système informatisé et pour transmettre lesdits signaux de message audio-fréquences sélectionnés (75) à partir dudit moyen audio-fréquences pour sortie vers le téléphone (14) de la personne.

11. Système informatisé selon la revendication 1 ou 10, dans lequel ledit moyen audio-fréquences comprend de plus un convertisseur analogique/numérique audio-fréquences (24) et un convertisseur numérique/analogique audio-fréquences (74).

12. Système informatisé (10) selon la revendication 1, pour collecter une grande variété d'informations d'entrée (12) comportant des ventes de biens ou de services par des réponses d'une personne dans un dialogue téléphonique entre la personne et ledit système informatisé (10), caractérisé en ce qu'il comprend

un moyen (42) pour produire une multitude de questions et commentaires présélectionnés désignés pour obtenir de la personne ladite variété d'informations d'entrée (12), comportant des informations commerciales associées, des informations de vente et des informations d'expédition qui se rapportent auxdites ventes de biens ou de services, dans lequel

le moyen pour collecter (32, 40, 42) lesdites informations d'entrée à partir de ladite personne est prévu pour collecter les informations d'entrée répondant auxdites questions et commentaires présélectionnés.

13. Système selon la revendication 12, dans lequel lesdites questions et commentaires comportent des options présentées à la personne pour sélectivement vérifier, corriger et ajouter des informations à ladite variété d'informations.

14. Système selon la revendication 12, dans lequel ledit moyen pour produire des questions comprend le moyen audio-fréquences (24, 74) pour sortir des signaux de message audio-fréquences (75) vers la personne et un moyen d'ordinateur (42) pour délivrer une séquence prédéterminée de questions et de commentaires à la personne.

15. Système selon la revendication 12, dans lequel ledit moyen de collecte (32, 40) comprend un moyen (48) pour sélectivement mémoriser et enregistrer lesdites informations d'entrée.

16. Système informatisé (10) selon la revendication 1, caractérisé en ce qu'il comprend

un moyen (42) pour produire une multitude de questions ou commentaires présélectionnés désignés pour obtenir à partir de la personne lesdites réponses délivrant lesdites informations d'entrée,

dans lequel ledit moyen (32, 40, 42) pour collecter lesdites informations d'entrée est prévu pour collecter à partir de ladite personne lesdites réponses auxdites questions ou commentaires présélectionnés, ledit moyen de collecte étant activé en réponse à l'achèvement de chaque dite question ou commentaire présélectionné et ledit moyen de collecte étant désactivé sur atteinte des conditions prédéterminées comprenant au moins une condition parmi : (a) le dépassement d'une durée de silence présélectionnée pour lesdites réponses qui est au-dessous d'un niveau de seuil audio-fréquences prédéterminé pendant ladite durée présélectionnée, (b) la personne entrant une réponse spécifique de ladite réponse, (c) la personne entrant une réponse particulière desdites réponses et (d) la personne continuant à délivrer lesdites réponses après qu'une durée particulière se soit écoulée.

17. Système selon la revendication 16, dans lequel ledit moyen de collecte comprend un moyen d'enregistrement audio-fréquences.

18. Système selon la revendication 16, dans lequel ledit moyen de collecte comprend un moyen pour enregistrer les réponses codées parmi lesdites réponses.

19. Système selon la revendication 16, dans lequel ledit moyen pour produire des questions comporte un moyen d'ordinateur (42) répondant auxdites réponses pour produire une séquence suivante desdites questions et commentaires présélectionnés fonction de la nature desdites réponses (12).

20. Système selon la revendication 19, dans lequel ladite séquence suivante comprend la terminaison desdites questions et commentaires si lesdites réponses résultent en l'atteinte d'au moins une d'une multitude de conditions prédéterminées.

21. Système de communication informatisé (10) selon la revendication 1, caractérisé en ce que
ledit moyen (46, 48) pour mémoriser les informations audio-fréquences prédéterminées comporte une partie mémorisant un ensemble de comptes d'erreur prédéterminé caractéristique du nombre et du poids des diverses erreurs dans lesdites réponses de la personne,
et en ce que ledits moyens d'ordinateur (42) sont prévus pour analyser lesdites réponses et lesdites informations d'entrée afin de déterminer les erreurs commises dans lesdites réponses par la personne et pour sortir des signaux de message audio-fréquences associés (75) caractéristique desdits comptes d'erreur prédéterminés lorsque le nombre et le poids des erreurs commises par la personne coïncident avec certains comptes desdits comptes d'erreur prédéterminés.

22. Système selon la revendication 21, dans lequel ledit moyen audio-fréquences (24, 74) délivre de plus à la personne dans lesdits signaux de message audio-fréquences (75) des options sélectionnées pour délivrer lesdites informations audio-fréquences audit système.

23. Système selon la revendication 21, dans lequel lesdites réponses de la personne comprennent sélectivement au moins une réponse parmi les réponses audio-fréquences par la personne et une réponse codée en tonalité.

24. Système de communication informatisé (10) selon la revendication 21, caractérisé en ce que
ledit moyen d'ordinateur (42) est prévu pour analyser lesdites informations d'entrée (12) afin de déterminer les erreurs commises dans lesdites réponses par la personne et pour déconnecter ledit système informatisé (10) du demandeur lorsque les erreurs sont au moins égales audit compte d'erreur de demandeur prédéterminé.

25. Dispositif pour programmation par l'utilisateur de manière prédéterminée dans un système de communication informatisé selon la revendication 1 pour collecter automatiquement les informations d'entrée (12) pendant un dialogue téléphonique entre une personne et ledit système informatisé (10), caractérisé en ce qu'il comprend :
un moyen utilisateur (14) pour délivrer un signal d'entrée (12) répondant à une entrée de l'utilisateur,
un moyen pour enregistrer une entrée audio-fréquences (12),
un moyen (24) pour numériser ladite entrée audiofréquences (12),
un moyen de mémorisation (48) pour mémoriser les informations de programmation exécutive et pour mémoriser également ladite entrée audio-fréquences numérisée et lesdits programmes d'ordinateur caractéristiques de ladite manière prédéterminée de programmation, et
un moyen d'ordinateur (42) répondant auxdits signaux d'entrée pour programmation dudit système informatisé (10) de ladite manière prédéterminée et répondant audit système informatisé connectant téléphoniquement à la personne, ledit moyen d'ordinateur exécutant les programmes sélectionnés parmi lesdits programmes d'ordinateur et recherchant et utilisant de manière sélective les parties de ladite entrée audio-fréquences numérisée en conformité avec ladite manière prédéterminée pour établir ledit dialogue téléphonique et collecter lesdites informations d'entrée.

26. Dispositif selon la revendication 25, dans lequel ladite entrée utilisateur comprend au moins une entrée parmi une entrée audio-fréquences (12) et une entrée codée par tonalité.

27. Dispositif selon la revendication 25, dans lequel ledit moyen de mémorisation comprend au moins un système parmi les systèmes matériels (24) et ledit moyen d'ordinateur répondant au logiciel d'ordinateur sélectionné.

28. Système de communication informatisé (10) selon la revendication 1 pour collecter simultanément des informations d'entrée (12) provenant d'une multitude de personnes différentes par l'intermédiaire d'un dialogue entre chacune des personnes et un ensemble d'une multitude d'ensembles respectifs associés de signaux de message audiofréquences (75) sortis dudit système, caractérisé en ce qu'il comprend :
un moyen (16) pour connecter chacune desdites personnes audit système informatisé,
ledit moyen d'ordinateur (42) étant prévu pour délivrer simultanément une multitude d'ensembles de signaux audio-fréquences (71) à ladite multitude de personnes, chaque dit ensemble associé à une personne respective parmi les personnes,
ledit moyen audio-fréquences (24, 74) étant prévu pour sortir chaque dit ensemble respectivement associé des signaux de message audio-fréquences (75) à la personne respectivement associée répondant auxdits signaux audio-fréquences (12).

29. Système selon la revendication 28, dans lequel ladite multitude d'ensembles comprend sélectivement le même ensemble, des ensembles différents et des mélanges de ceux-ci qui sont sortis vers ladite multitude de personnes.

**FIG. 1**

## FIG.2

```
CONCEPT OF APPLICATION
        ↓
    CALLER PATH
        ↓
  PROGRAM FLOW CHART
        ↓
  PROGRAM DEFINITION
        ↓
  SPEECH DEFINITION
        ↓
     SCRIPT PROP
   AND RECORDING
        ↓
  PROGRAM DIGITIZATION
        ↓
    PROGRAM TEST
        ↓
    MULTILINE RUN
```

## FIG.3

```
        ↓
      SWITCH ──── 18
        ↓
      OPERATORS
  NO    BUSY
  ←──     ?
        ↓ YES
  COMPUTERIZED SYSTEM 10
        ↓
   62   HARD DISK
        STORAGE
          48
              TRANSCRIBE
              SERVICE AND
               CALL BACK
              OPERATORS 62
```

# *FIG.4*

```
ANSWER
  ↓
SPEAK INTRODUCTION
  ↓
INCREMENT
MESSAGE COUNTER
  ↓
RECORD MESSAGE
(NAME, PHONE No. etc.)
  ↓
SPEAK THANK YOU
  ↓
HANG UP ──────── CYCLE
```

| STEP | FUNCTION | OPER 1 | OPER 2 | COMMENTS |
|------|----------|--------|--------|----------|
| 90 | STORE | 0 | *NUM | ZERO MESSAGE COUNTER |
| 100 | ANSWER | 1 | | ANSWER PHONE ON 1 RING |
| 110 | SPEAK | INTRO | | WELCOME AND REQUEST INFO |
| 120 | INCREMENT | *NUM | | INCREASE MESSAGE NUMBER BY 1 |
| 130 | ONSILENCE | 160 | | GOTO STEP 160 WHEN DONE |
| 140 | MAXTIME | 30 | | ALLOW 30 SECONDS |
| 150 | RECORD | MESSAGE *NUM | | STORE MESSAGE NUMBER *NUM |
| 160 | SPEAK | THANK YOU | | SAY THANK YOU AND BYE |
| 170 | HANG UP | | | DISCONNECT CALLER |
| 180 | GOTO | 90 | | RETURN TO WAIT FOR NEXT CALL |